# EUROPÄISCHE PATENTSCHRIFT

(11) **EP 1 927 815 B1**
(45) Veröffentlichungstag und Bekanntmachung des Hinweises auf die Patenterteilung: **29.04.2009**
(21) Anmeldenummer: 06024566.9
(22) Anmeldetag: 28.11.2006
(51) Int. Cl.: F24J 3/06

(54) **Verfahren zur Erzeugung von Wärme aus einem natürlichen Gewässer**
Method of production of heat out of a natural body of water
Méthode de production de la chaleur d'eaux naturelles

(43) Veröffentlichungstag der Anmeldung: 04.06.2008
(73) Patentinhaber: Loidl, Max, 84359 Simbach am Inn (DE)
(72) Erfinder: Loidl, Max, 84359 Simbach am Inn (DE)

(56) Entgegenhaltungen:
- DE-A1- 2 400 175
- DE-A1- 19 933 820
- GB-A- 1 104 261
- JP-A- 57 018 473
- SE-B- 445 254
- US-A- 4 464 909

## Beschreibung

Wärmepumpen werden bereits zur Nutzung der Erdwärme, des Grundwassers etc. eingesetzt. Femwärme-Wärmepumpenheizkraftwerke und Femwärme-Geothermieheizkraftwerke etc. sind bereits in Betrieb. Der Bau von Großwärmepumpen für eine kombinierte Femkälte- und Femwärmeversorgung ist heute bereits in den MW-Leistungsbereich durch Parallel- und Serienschaltung möglich. Durch geeignete Kältemittel und durch Hintereinanderschaltung mehrerer Wärmepumpen kann auch ein zum Betrieb einer Dampfturbine zur Elektrizitätserzeugung erforderliches Temperaturniveau erreicht werden. Von allen Wärmepumpenarten haben Wasser-Wasser-Wärmepumpen den höchsten Wirkungsgrad, der durch das Direktverdampfungsverfahren noch erhöht werden kann. Durch Verwendung von Gasmotoren für Wärmepumpen und bei der Erzeugung von Strom für strombetriebene Wärmepumpen durch gasbetriebene Dampfturbinen lässt sich durch Kraft-Wärmekopplung und Verwendung der Prozesswärme die Energiebilanz von Wärmepumpen auch im Temperaturbereich ab 75 °C erheblich verbessern.
Wegen Gerölls und Treibguts und dem Druck des fließenden Wassers lassen sich Wärmetauscher von Wärmepumpen in fließenden Gewässern jedoch nur sehr erschwert frei verlegen. Wärmetauscher in Gewässern, und Wärmekraftwerke außerhalb von bereits vorhandenen Kraftwerksanlagen können sich störend auf die Umwelt auswirken. Die Errichtung von neuen Kraftwerken ist im allgemeinen mit hohen Auflagen verbunden.
Bei den Wärmepumpenanlagen mit Erdsonden, Grundwasserbrunnen, Erdkollektoren etc. muss stets eine sehr große Wasser- oder Solemenge an den Verdampfer zum Wärmeaustausch herangeführt werden. Dies geschieht durch Pumpen, wodurch sich die Energiebilanz solcher Wärmepumpenanlagen erheblich verschlechtert. Außerdem besteht dabei die Gefahr der Verockerung von Wärmetauschern und die Gefahr der Aufnahme von aggressiven Stoffen in das Wärmetauschersystem.

Dokument DE 199 33 820 A1 beschreibt ein Verfahren und einen Wärmetauscher, dessen Kollektor kompakte Außenabmessungen sowie eine große Kontaktfläche mit dem wärmeabgebenden Medium aufweist, dessen Kollektor ganzheitlich in eine Flüssigkeit eintaucht und von dieser umspült wird oder dem durch einen Fließvorgang regelmäßig Wärmeenergie zugeführt wird, bzw. das wärmeabgebende flüssige Medium den Kollektor kontinuierlich oder quasi-kontinuierlich durchströmt, wobei der Kollektor aus mehreren schraubenförmigen, koaxial angeordneten Kollektorröhren mit nach oben abnehmenden Schraubendurchmesser besteht, die genau einen Strömungskanal bilden.

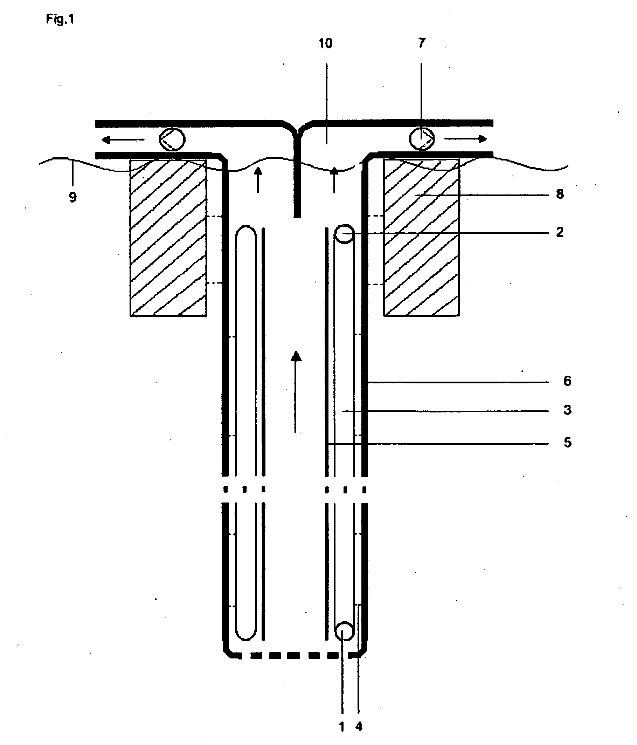

Dokument US 446 49 09 A beschreibt ein Verfahren, bei dem einem sich in Ufernähe unter Wasser befindlichen Wärmetauscher, mit vorzugsweise schraubenförmig gebogenen mit vertikaler Achse angeordneten Wärmetauscherrohren, durch ein ungefähr in der Mitte des Bodens des Wärmetauschers vertikal angebrachtes Rohr, Wasser in konstanter oder veränderlicher Flussmenge, aus geeigneter Tiefe, zugeführt wird, bzw. bei dem einem ähnlichen, sich oberhalb der Wasseroberfläche befindlichen Wärmetauscher, Wasser durch eine sich unter Wasser befindliche Pumpe zugeführt wird und außerdem die im Wärmetauscher konzentrisch angeordneten Rohre durch rotierende Bürsten von Algen etc. gereinigt werden.
Aufgabe der vorliegenden Erfindung ist es, die erwähnten Nachteile zu vermeiden und auch für den erforderlichen Schutz der sich im Wasser befindlichen Wärmetauscher, vor allem in fließenden Gewässern, deren erforderliche Befestigung bzw. Anbringung im Wasser und die Erzeugung einer Strömung um bzw. durch den Wärmetauscher zu sorgen.
Lässt man einen sich in einem natürlichen Gewässer unter Wasser befindlichen Wärmetauscher, bestehend aus sehr gut wärmeleitendem Material, der durch die Kombination mit einem stabilen und verstärkenden Gitter geschützt wird, außenseitig durch eine große Menge von strömenden Wasser aus natürlichen Gewässern umfließen, so kann der Wärmeaustausch bereits hier an ein innenseitig strömendes in einem Wärmetauscherkreislauf befindliches Medium oder beim Direktverdampfungsverfahren an ein Kältemittel der Wärmepumpenanlage selbst erfolgen.
Sowohl beim Direktverdampfungsverfahren, als auch beim Zwischenschalten eines Primärkreislaufs lässt sich daher durch Wasser aus natürlichen Gewässern, welches außenseitig die Wärmetauscher umströmt, die Energiebilanz von Wärmepumpenanlagen erheblich verbessern, wenn dazu die Eigenströmung von Gewässern (z. b. Flüsse, Kanäle, Meere) verwendet wird oder Strömungen verwendet werden, die ohne großen zusätzlichen Energieaufwand in natürlichen Gewässern erzeugt werden können. Diese Strömungen in natürlichen Gewässern können jedoch bei einem Wärmetauscher, bestehend aus sehr gut wärmeleitendem Material, nur dann verwendet werden, wenn der Schutz des Wärmetauschers hinsichtlich Beschädigungen, die direkt oder indirekt durch die äußere Strömung entstehen können, sicher gestellt wird, was durch die Kombination mit stabilen und verstärkenden Gitterstäben erfolgt, die zur Strömungsseite hin, unmittelbar vor den Wärmetauscherrohren angeordnet sind.
Wird in einem sich in einem natürlichen Gewässer unter Wasser vertikal befindlichem Rohr
Wasser von unten nach oben gepumpt, so ist dies in Folge des nach unten zunehmenden hydrostatischen Druckes des Wassers mit relativ geringem Energieaufwand möglich. Die Pumpe muss dazu nur aus einem vertikal angebrachten Rohr Wasser, welches sich unmittelbar unterhalb der Wasseroberfläche befindet an die Wasseroberfläche pumpen, und Wasser aus tieferen Schichten drückt im Rohr von unten nach oben nach und füllt das Rohr fortlaufend. Die dabei erzeugte Strömung an der unteren Ansaugstelle des Rohres oder an Ansaugstellen entlang des Rohres, und die erzeugte Strömung im Rohr werden dabei zum Umströmen von dort angebrachten Wärmetauscherrohren verwendet.
Im folgenden auszugsweise, teilweise schematisch und nicht maßstabsgetreu gezeichneten, im Längsschnitt dargestellten Ausführungsbeispiel Fig. 1 werden die vertikal parallel zueinander verlaufenden Wärmetauscherrohre ( 3 ), die entweder fortlaufend (z. B. mäanderförmig) miteinander verbundenen oder unten und oben parallel zueinander mit gemeinsamem Vor- und Rücklauf geschaltet sind, geschützt hinter stabilen Gitterstäben ( 5 ), die zur Strömungsseite hin, unmittelbar davor, parallel zu den Wärmetauscherrohren angeordnet sind, so an der Mantelinnenseite eines zylindrischen, sich in einem natürlichen Gewässer ( 9 ), vertikal aufrecht unter Wasser befindlichen Schutzrohres ( 6 ) befestigt, dass Wasser, das im Schutzrohr (6) durch Saugrohre ( 10 ) mit Pumpen ( 7 ) von unten nach oben gepumpt wird, an den vertikal angebrachten Wärmetauscherrohren ( 3 ) außenseitig entlangströmt und außerdem, befestigt mit Verstrebungen ( 4 ) auf der Außenseite des Schutzrohres ( 6 ), tangential angeordnete geschlossene Hohlkörper ( 8 ) angebracht sind, die die gesamte Anlage nahezu in einen Schwebezustand im Wasser bringen, der durch zusätzliche Bojen und Verankerungen ausgeglichen werden kann. Der erforderliche Vorlauf ( 1 ) und Rücklauf ( 2 ) des Wärmetauschers ergibt sich aus dem jeweiligen Verlauf der Wärmetauscherrohre und muss über sehr gut isolierte flexible Leitungen zum Ufer erfolgen oder es kann der Innenraum eines genügend großen Hohlkörpers ( 8 ) zur Aufnahme der gesamten Wärmepumpenanlage oder weiterer Bauteile der Wärmepumpenanlage verwendet werden, wenn der Hohlkörper mit einer dichten Einstiegsluke und den erforderlichen flexilblen Hin- und Rückleitungen und Versorgungsleitungen zum Ufer versehen wird.

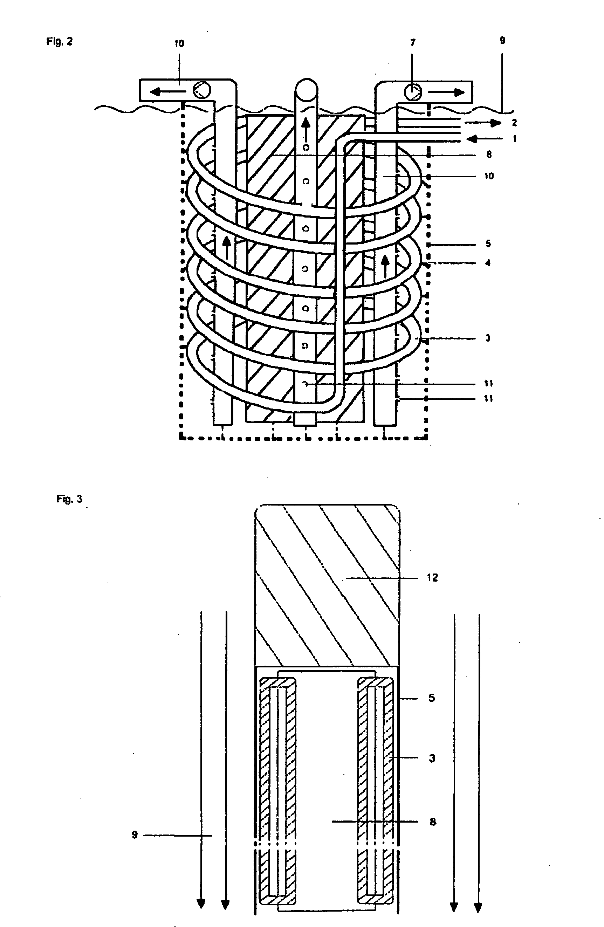

Im folgenden auszugsweise, teilweise schematisch und nicht maßstabsgetreu gezeichneten, von der Seite gesehenen Ausführungsbeispiel Fig. 2 wird das Wärmetauscherrohr ( 3 ), bestehend aus sehr gut wärmeleitendem Material, in die Form einer Schraubenlinie gebogen, die sich vertikal aufrecht unter Wasser befindet, wobei im Rohrinneren ein in einem Wärmetauscherkreislauf befindliches Medium oder ein Kältemittel der Wärmepumpenanlage selbst strömt und dieses mit vielen Windungen versehene schraubenlinig gebogene Wärmetauscherrohr von außen durch ein die Schraubenlinie zylindrisch ummantelndes Gitter aus vertikal angebrachten stabilen Gitterstäben ( 5 ) geschützt wird und sich außerdem im Innenraum der Schraubenlinie, parallel zur Mantelfläche der Schraubenlinie, vertikal angebrachte, mit zur Schraubenlinie hin ausgerichteten geeigneten Wassereinlassbohrungen ( 11 ) versehene, bis zum unteren Ende der Schraubenlinie reichende unten verschlossene Saugrohre ( 10 ) befinden, an deren oberen Enden sich Saugpumpen ( 7 ) befinden, die das hochgepumpte Wasser an der Wasseroberfläche eines natürlichen Gewässers ( 9 ) seitlich wegpumpen, so dass das schraubenlinig gebogene mit Verstrebungen ( 4 ) befestigte Wärmetauscherrohr ( 3 ) von außen nach innen durch das umgebende Wasser horizontal umströmt wird und sich außerdem innerhalb der von den Saugrohren gebildeten zylindrischen Mantelfläche ein geschlossener zylinderförmiger Hohlkörper ( 8 ) befindet, der als Auftriebskörper die gesamte Anlage nahezu in einen Schwebezustand im Wasser bringt, der noch durch zusätzliche Bojen und Verankerungen ausgeglichen werden kann. Der erforderliche Vorlauf ( 1 ) und Rücklauf ( 2 ) des Wärmetauschers muss über sehr gut isolierte flexible Leitungen zum Ufer und zur Wärmepumpe erfolgen oder es kann der Innenraum eines genügend großen Hohlkörpers ( 8 ) zur Aufnahme der gesamten Wärmepumpenanlage oder weiterer Bauteile der Wärmepumpenanlage verwendet werden, wenn der Hohlkörper mit einer dichten Einstiegsluke und den erforderlichen flexilblen Hin- und Rückleitungen und Versorgungsleitungen zum Ufer hin versehen wird.

Im folgenden auszugsweise, teilweise schematisch und nicht maßstabsgetreu gezeichneten, von oben gesehenen Ausführungsbeispiel Fig. 3 wird eine Kombination aus stabilen und verstärkenden Schutzgitterstäben ( 5 ) und Wärmetauscherrohren( 3 ), bestehend aus sehr gut wärmeleitendem Material, an strömungsfesten Einbauten ( 12 ) in Flüssen und Kanälen ( z. B. Pfeiler bei Brücken, Kraftwerken, Schleusen, Wehren ) strömungsabwärts befestigt, unmittelbar hinter den strömungsfesten Einbauten, an einem quaderförmigen ( hier in Einbautenbreite verlaufenden ) geschlossenen Hohlkörper ( 8 ) angebracht, so dass an der Außenseite des Wärmetauschers die Strömung eines natürlichen Gewässers ( 9 ) parallel vorbeistreicht und der Hohlkörper ( 8 ) als Auftriebskörper obige Kombination nahezu in einen Schwebezustand im Wasser bringt, der durch zusätzliche Bojen und Verankerungen ausgeglichen werden kann. Der (nicht eingezeichnete) erforderliche Vor- und Rücklauf des Wärmetauschers ergibt sich aus dem Verlauf der Wärmetauscherrohre und muss über sehr gut isolierte flexible oder starre Leitungen zu den festen Einbauten und zur Wärmepumpe erfolgen oder es kann der Innenraum eines genügend großen Hohlkörpers ( 8 ) zur Aufnahme der gesamten Wärmepumpenanlage oder weiterer Bauteile der Wärmepumpenanlage verwendet werden, wenn der Hohlkörper mit einer dichten Einstiegsluke und den erforderlichen Hin- und Rückleitungen und Versorgungsleitungen über die festen Einbauten zum Ufer führend versehen wird.

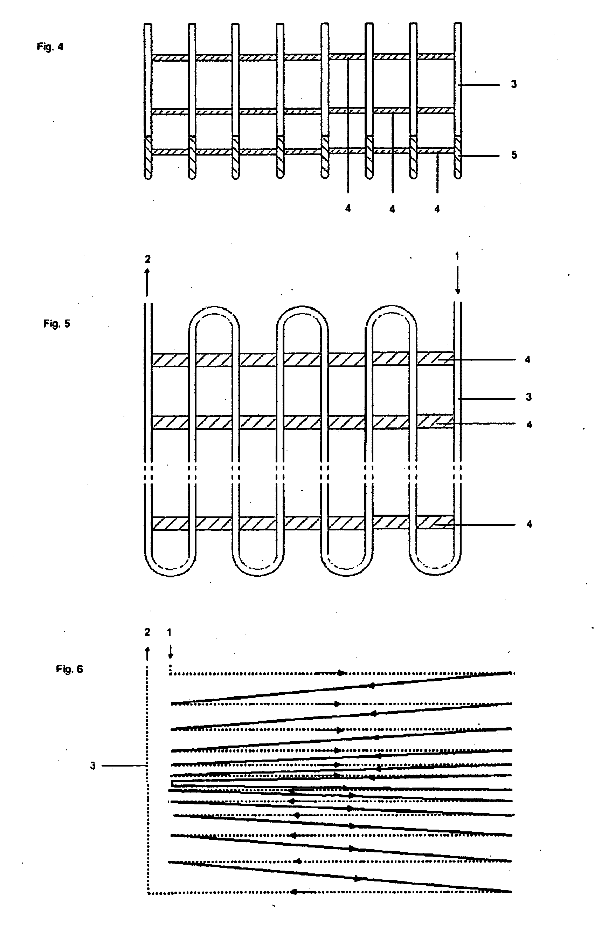

Fig. 6 zeigt einen möglichen Verlauf der Wärmetauscherrohre ( 3 ) mit Zulauf ( 1 ) und Rücklauf ( 2 ) auf der Wand eines Hohlkörpers ( 8 ), wobei die durchgezogenen Linen den Verlauf der Wärmetauscherrohre und Gitterstäbe auf der zur Strömung weisenden Außenseite der Wand des Hohlkörpers darstellen und die gepunkteten Linien den Verlauf der Wärmetauscherrohre auf der Innenseite der Wand des Hohlkörpers darstellen. Der außen in Strömungsrichtung leicht divergente Verlauf der Wärmetauscherrohre und Gitterstäbe, die unmittelbar davor parallel zu den Wärmetauscherrohren angebracht werden, verhindert dabei ein mögliches Festklemmen von Treibgut.

Die Anbringung einer Kombination aus stabilen und verstärkenden Schutzgitter und Wärmetauscher, bestehend aus sehr gut wärmeleitenden Material, ist unter Wasser auch an den Uferböschungen von Flüssen und Kanälen und am Kanalboden bei Kanälen ohne Schotterführung möglich. Fig. 6 zeigt einen möglichen Verlauf der Wärmetauscherrohre ( 3 ) mit Zulauf ( 1 ) und Rücklauf ( 2 ) auf der Wand eines quaderförmigen, plattenartigen, nicht eingezeichneten, geschlossenen Hohlkörpers, wobei die durchgezogenen Linien den Verlauf der Wärmetauscherrohre und Gitterstäbe auf der zur Strömung weisenden Außenseite der Wand des Hohlkörpers darstellen und die gepunkteten Linien den Vorlauf der Wärmetauscherrohre auf der Innenseite der Wand des Hohlkörpers darstellen. Der außen in Strömungsrichtung leicht divergente Verlauf der Wärmetauscherrohre und Gitterstäbe, die unmittelbar davor parallel zu den Wärmetauscherrohren angebracht werden, verhindert dabei ein mögliches Festklemmen von Treibgut. Die Weiterführung des Vor und Rücklaufs des Wärmetauschers muss über sehr gut isolierte Leitungen zum Ufer und zur Wärmepumpe erfolgen.

Auch bei einem Wasserkraftwerk lässt sich im Bereich vor den Turbinenanlagen unter Wasser eine solche Kombination aus Wärmetauscher, bestehend aus sehr gut wärmeleitendem Material und stabilem verstärkenden Gitter befestigen. In Wasserkraftwerken werden zum Schutz der Turbinenanlagen vor dem Turbineneinlauf Schutzgitter, sogenannte Kraftwerksrechen angebracht. Hinter jedem Stab des Schutzgitters, bzw. hinter jedem n-ten Stab je nach dem Rohrkrümmungsradius der Wärmetauscherrohre, soll geschützt auf der Kraftwerksseite, parallel zu den Gitterstäben, zusätzlich ein Wärmetauscherrohr, bestehend aus sehr gut leitendem Material, angebracht werden, wobei diese von unten nach oben parallel zueinander verlaufenden Wärmetauscherrohre ( 3 ) entweder fortlaufend, z. B. mäanderförmig, miteinander verbundenen sind oder unten und oben parallel zueinander mit gemeinsamem Vor und Rücklauf geschaltet sind. Eine solche Anordnung des Wärmetauschers ermöglicht es, die wichtigen Anströmungsverhältnisse vor den Kraftwerksturbinen beizubehalten.
Um den Wärmetauscher gegen Stöße zu schützen, kann er auch in Kombination mit einem weiteren Gitter im Bereich zwischen dem eigentlichen Kraftwerksrechen und dem Turbinenbereich des Wasserkraftwerks angebracht werden, z. B. Anbringung bei den Dammtafeln.

Eine einfache und sichere, auch nachträglich mögliche Befestigungsmöglichkeit und Wartungsmöglichkeit einer solchen Kombination aus Wärmetauscher und Gitter ist auch im Bereich innerhalb der Dammtafeln möglich, da dieser Bereich dazu wasserfrei gemacht werden kann. Bei besonders schwierigen Anströmungsverhäftnissen zu den Turbinen können die Wärmetauscherelemente in Kombination mit einem weiteren zusätzlichen Kraftwertcsrechen auch dem ursprünglichen Kraftwerksrechen vorgesetzt werden, bei entsprechender Befestigung an den Zwischenpfeilem und Verwendung einer Rechenreinigungsanlage. Weitere Vorteile sind, dass eine einfache Stromzuführung zur Wärmepumpenanlage durch das Wasserkraftwerk erfolgen kann, eine umweltverträgliche Errichtung eines Wärmepumpen-Heizkraftwerkes auch auf der Wasserkraftwerksanlage oder in der Umgebung der Wasserkraftwerksanlage möglich ist, Fernwärmeleitungen auch auf der Trassenführung der Stromleitungen möglich sind und nachhaltige umweltfreundliche Energieversorgung ohne Abhängigkeit von weiteren Energieträgem möglich ist und die Wartung der Wärmepumpenanlage durch Einbindung des bereits vorhandenen Personals des Wasserkraftwerks erfolgen kann.
In Fig. 4 (Querschnitt) und Fig. 5 (Längsschnitt) wird ein Ausführungsbeispiel für ein Wärmetauscherelement mit einer mäanderförmigen Verbindung der Wärmetauscherrohre ( 3 ) mit Vor1auf ( 1 ), Rücklauf ( 2 ), Querverstrebung ( 4 ) und Kraftwertcsrechen aus stabilen Gitterstäben ( 5 ) gezeigt.

## Patentansprüche

1. Verfahren zur Erzeugung von Wärme aus einem natürlichen Gewässer (9), mit oder ohne wesentliche oder nicht stets eindeutige horizontal verlaufende eigene Strömung (z. B: Teiche, Seen, Meere), durch eine Wärmepumpenanlage mit einem Wärmetauscher, wobei an dem sich in dem natürlichen Gewässer (9) unter Wasser befindlichen Wärmetauscher, bestehend aus sehr gut wärmeleitendem Material, der durch die Kombination mit einem stabilen und verstärkenden Gitter (5) geschützt wird, außenseitig Wasser vorbeiströmt und innenseitig ein in einem Wärmetauscherkreislauf befindliches Medium strömt oder bei einem Direktverdampfungsverfahren ein Kältemittel der Wärmepumpenanlage selbst strömt,
**dadurch gekennzeichnet, dass** Rohre (3), die entweder fortlaufend, z. B. mäanderförmig, miteinander verbunden oder gebogen sind oder an ihren Enden parallel zu einander mit gleichsinniger Durchflussrichtung geschaltet sind, geschützt hinter stabilen Gitterstäben (5), die zur Strömungsseite hin, unmittelbar davor, parallel zu den Wärmetauscherrohren (3) angeordnet sind, so an der Mantelinnenseite eines zylindrischen, sich vertikal aufrecht unter Wasser befindlichen Schutzrohres (6) mit genügend großem Durchmesser befestigt sind, dass Wasser, das im Schutzrohr (6), durch Saugrohre (10), mit Pumpen (7) von unten nach oben gepumpt wird, an den vertikal angebrachten Wärmetauscherrohren (3) außenseitig entlang strömt und außerdem, befestigt auf der Außenseite des Schutzrohres (6), tangential angeordnete geschlossene Hohlkörper (8) angebracht sind, um die gesamte Anlage nahezu in einen Schwebezustand im Wasser zu bringen, der durch zusätzliche Bojen und Verankerungen ausgeglichen werden kann.

2. Verfahren zur Erzeugung von Wärme aus einem natürlichen Gewässer (9), mit oder ohne wesentliche oder nicht stets eindeutige horizontal verlaufende eigene Strömung (z. B. Teiche, Seen, Meere), durch eine Wärmepumpenanlage mit einem Wärmetauscher, wobei an dem sich in dem natürlichen Gewässer (9) unter Wasser befindlichen Wärmetauscher, bestehend aus sehr gut wärmeleitendem Material, der durch die Kombination mit einem stabilen und verstärkenden Gitter (5) geschützt wird, außenseitig Wasser vorbeiströmt und innenseitig ein in einem Wärmetauscherkreislauf befindliches Medium strömt oder bei einem Direktverdampfungsverfahren ein Kältemittel der Wärmepumpenanlage selbst strömt,
**dadurch gekennzeichnet, dass** ein mit vielen Windungen versehenes schraubenlinig mit vertikaler Achse gebogenes Rohr (3), sich unter Wasser befindet und dieses schraubenlinig gebogene Rohr (3) von außen durch ein die Schraubenlinie zylindrisch ummantelndes Gitter aus vertikal angebrachten stabilen Gitterstäben (5) geschützt wird und sich außerdem im Innenraum der Schraubenlinie, parallel zur Mantelfläche der Schraubenlinie, vertikal angebrachte, mit zur Schraubenlinie hin ausgerichteten Wassereinlassbohrungen (11) versehene, bis zum unteren Ende der Schraubenlinie reichende unten das hochgepumpte Wasser an der Wasseroberfläche seitlich wegpumpen, so dass die Schraubenlinie von außen nach innen durch das angesaugte umgebende Wasser horizontal durchströmt wird und sich außerdem innerhalb der von den Saugrohren (10) gebildeten zylindrischen Mantelfläche ein geschlossener zylinderförmiger Hohlkörper (8) befindet, der als Auftriebskörper die gesamte Anlage nahezu in einen Schwebezustand im Wasser bringt, der noch durch zusätzliche Bojen und Verankerungen ausgeglichen werden kann.

3. Verfahren zur Erzeugung von Wärme aus einem natürlichen Gewässer (9) mit eigener Strömung, durch eine Wärmepumpenanlage mit einem Wärmetauscher, wobei an dem sich in dem natürlichen Gewässer (9) unter Wasser befindlichen Wärmetauscher, bestehend aus sehr gut wärmeleitendem Material, der durch die Kombination mit einem stabilen und verstärkenden Gitter (5) geschützt wird, außenseitig Wasser vorbeiströmt und innenseitig ein in einem Wärmetauscherkreislauf befindliches Medium strömt oder bei einem Direktverdampfungsverfahren ein Kältemittel der Wärmepumpenanlage selbst strömt,
**dadurch gekennzeichnet, dass** Rohre (3), die entweder fortlaufend, z. B. mäanderförmig, miteinander verbunden oder gebogen sind oder an ihren Enden parallel zueinander mit gleichsinniger Durchflussrichtung geschaltet sind, geschützt hinter stabilen Gitterstäben (5), die zur Strömungsseite hin, unmittelbar davor, parallel zu den Wärmetauscherrohren (3) angeordnet sind, wobei die Kombination aus Gitterstäben (5) und Wärmetauscherrohren (3) an strömungsfesten Einbauten (12), strömungsabwärts unmittelbar hinter den Einbauten (12), in Verlägerung der Außenwände dieser Einbauten (12) an einem quaderförmigen geschlossenen Hohlkörper (8) angebracht sind, so dass an der Außenseite des Wärmetauschers die Strömung des natürlichen Gewässers (9) parallel vorbeistreicht und der Hohlkörper (8) als Auftriebskörper obige Kombination nahezu in einen Schwebezustand im Wasser bringt, der noch durch zusätzliche Bojen und Verankerungen ausgeglichen werden kann.

## Claims

1. Method of production of heat out of a natural body of water (9), having or not having an essential or not always exactly horizontal flowing own current (e.g. ponds, lakes, the sea), by means of a heat pump system having a heat exchanger, in which the heat exchanger, which is located under water in the natural body of water (9), consists of material having a very good thermal conductibility, is protected by being combined with a firm and reinforcing grid (5), has water flowing along its exterior and a medium in a heat exchanger circuit flowing within its interior or a refrigerant of the heat pump system itself flowing in case of a direct expansion process,
**characterized in that** tubes (3), which are either continuously, e.g. in a meandering course, connected with each other or bent or are connected to each other in parallel at their ends in the same direction of flow, protected behind firm grid members (5), which are arranged such that they face the current, just in front of and parallel to the tubes (3) of the heat exchanger, are fixed to the inner surface area of a cylindrical protecting tube (6), which is located vertically upright under water and has a sufficiently sized diameter, in a way, to enable water, which is pumped from the bottom to the top within the protecting tube (6) through suction tubes (10), by means of pumps (7), to flow along the exterior of the vertically mounted tubes (3) of the heat exchanger and, in additon to that, closed hollow bodies (8), which are fixed to the exterior of the protecting tube (6), are mounted in tangential arrangement, in order to cause a nearly floating condition of the whole system in the water, which can be compensated by supplementary buoys and anchors.

2. Method of production of heat out of a natural body of water (9), having or not having an essential or not always exactly horizontal flowing own current (e.g. ponds, lakes, the sea), by means of a heat pump system having a heat exchanger, in which the heat exchanger, which is located under water in the natural body of water (9), consists of material having a very good thermal conductibility, is protected by being combined with a firm and reinforcing grid (5), has water flowing along its exterior and a medium in a heat exchanger circuit flowing within its interior or a refrigerant of the heat pump system itself flowing in case of a direct expansion process,
**characterized in that** a pipe (3), having many turns and being bent helically along its vertical axis, is located under water und said helically bent pipe (3) is protected from the outside by a grid encasing the helical line cylindrically, the grid consisting of vertically mounted firm grid members (5) and, in addition to that, closed suction tubes (10) are mounted vertically in the interior of the helical line, parallel to the surface area of the helical line, the suction tubes (10), which go down to the lower end of the helical line, having water inlet bores (11) facing the helical line, the suction tubes (10) having suction pumps (7) at their upper ends, which transport the pumped-up water to the side at the water surface, thus causing the surrounding water that was sucked in to flow through the helical line horizontally from the exterior to the interior and, in addition to that, a closed cylindrical hollow body (8) is located within the cylindrical surface area, which is formed by the suction tubes (10), the hollow body (8), which is a float, causing a nearly floating condition of the whole system in the water, which can be compensated by supplementary buoys and anchors additionally.

3. Method of production of heat out of a natural body of water (9), having an own current, by means of a heat pump system having a heat exchanger, in which the heat exchanger, which is located under water in the natural body of water (9), consists of material having a very good thermal conductibility, is protected by being combined with a firm and reinforcing grid (5), has water flowing along its exterior and a medium in a heat exchanger circuit flowing within its interior or a refrigerant of the heat pump system itself flowing in case of a direct expansion process,
**characterized in that** tubes (3), which are either continuously, e.g. in a meandering course, connected with each other or bent or connected to each other in parallel at their ends in the same direction of flow , protected behind firm grid members (5), which are arranged such that they face the current, just in front of and parallel to the tubes (3) of the heat exchanger, in which the combination of grid members (5) and tubes (3) of the heat exchanger are mounted on stationary installations (12) in the current, downstream just behind the installations (12), in extension of the exterior walls of these installations (12), on a cuboid-shaped closed hollow body (8), thus causing the current of the natural body of water (9) to flow along the exterior of the heat exchanger parallel to same and, the hollow body (8), which is a float, causing a nearly floating condition of the above-mentioned combination in the water, which can be compensated by supplementary buoys and anchors additionally.

## Revendications

1. Méthode de production de la chaleur d'eaux naturelles (9) présentant un propre écoulement sensible ou non, ou présentant un écoulement n'étant pas toujours sensible et se déplaçant horizontalement (tels que étangs, lacs, mers), à l'aide d'une installation de pompe à chaleur comprenant un échangeur de chaleur, dans le cadre de laquelle ledit échangeur de chaleur, qui est composé d'un matériau doté d'une très bonne thermoconductivité et protégé par une grille constituée de barreaux (5) stables et renforcés, se trouve immergé dans le cours d'eau naturel (9) et l'eau qui s'écoule passe le long des flancs extérieurs dudit échangeur de chaleur pendant que, à l'intérieur, circule un fluide contenu dans un circuit d'échange de chaleur, ou, dans le cas d'un procédé de vaporisation directe, circule de lui-même un agent réfrigérant de l'installation de pompe à chaleur,
**caractérisé en ce que** les tubes d'échange de chaleur (3), qui sont soit reliés les uns aux autres de manière continue, par exemple sous forme de serpentin, soit montés à leurs extrémités parallèlement les uns par rapport aux autres avec un sens d'écoulement de fluide identique, sont protégés par des barreaux (5) stables qui, agencés du côté de l'écoulement, sont placés directement devant les tubes d'échange de chaleur (3) et parallèlement à ces derniers, et fixés de telle sorte à la face intérieure de l'enveloppe d'un tube protecteur (6) cylindrique, lequel présente un diamètre suffisamment grand et se tient verticalement droit sous l'eau, que l'eau, qui est pompée du bas vers le haut dans le tube protecteur (6) par des pompes (7) au travers de tubes d'aspiration (10), passe le long des flancs extérieurs des tubes d'échange de chaleur (3) disposés verticalement, des corps creux (8) fermés et disposés tangentiellement étant par ailleurs fixés sur la face extérieure du tube protecteur (6) pour maintenir l'ensemble de l'installation dans un état de quasi-équilibre, lequel peut encore être stabilisé par des bouées et des ancrages supplémentaires.

2. Méthode de production de la chaleur d'eaux naturelles (9) présentant un propre écoulement sensible ou non, ou présentant un écoulement n'étant pas toujours sensible et se déplaçant horizontalement (tels que étangs, lacs, mers), à l'aide d'une installation de pompe à chaleur comprenant un échangeur de chaleur, dans le cadre de laquelle ledit échangeur de chaleur, qui est composé d'un matériau doté d'une très bonne thermoconductivité et protégé par une grille constituée de barreaux (5) stables et renforcés, se trouve immergé dans le cours d'eau naturel (9) et l'eau qui s'écoule passe le long des flancs extérieurs dudit échangeur de chaleur pendant que, à l'intérieur, circule un fluide contenu dans un circuit d'échange de chaleur, ou, dans le cas d'un procédé de vaporisation directe, circule de lui-même un agent réfrigérant de l'installation de pompe à chaleur,
**caractérisé en ce qu'**un tube (3) présentant de nombreuses spires enroulées selon un axe vertical se trouve immergé dans l'eau et que ce tube (3) en spirale est protégé de l'extérieur par une grille constituée de barreaux (5) stables placés verticalement et enveloppant de manière cylindrique ladite spirale, et **en ce que** se trouvent placés verticalement et parallèlement à la face d'enveloppe de la spirale, dans l'espace intérieur de la spirale, des tubes d'aspiration (10), lesquels sont fermés vers le bas, s'étendent jusqu'à l'extrémité inférieure de la spirale et sont munis d'orifices d'admission d'eau (11) orientés vers la spirale, et à l'extrémité desquels se trouvent des pompes d'aspiration (7) qui expulsent latéralement vers la surface l'eau pompée vers le haut si bien que la spirale est traversée horizontalement, de l'extérieur vers l'intérieur, par l'eau environnante pompée, et **en ce qu'**il se trouve à l'intérieur de la face d'enveloppe cylindrique formée par les tubes d'aspiration (10) un corps creux (8) cylindrique fermé qui, en sa fonction de corps doté d'une force ascensionnelle, maintient l'ensemble de l'installation dans un état de quasi-équilibre, lequel peut encore être stabilisé par des bouées et des ancrages supplémentaires.

3. Méthode de production de la chaleur d'eaux naturelles (9) présentant un propre écoulement, à l'aide d'une installation de pompe à chaleur comprenant un échangeur de chaleur, dans le cadre de laquelle ledit échangeur de chaleur, qui est composé d'un matériau doté d'une très bonne thermoconductivité et protégé par une grille constituée de barreaux (5) stables et renforcés, se trouve immergé dans le cours d'eau naturel (9) et l'eau qui s'écoule passe le long des flancs extérieurs dudit échangeur de chaleur pendant que, à l'intérieur, circule un fluide contenu dans un circuit d'échange de chaleur, ou, dans le cas d'un procédé de vaporisation directe, circule de lui-même un agent réfrigérant de l'installation de pompe à chaleur,
**caractérisé en ce que** les tubes d'échange de chaleur (3), qui sont soit reliés les uns aux autres de manière continue, par exemple sous forme de serpentin, soit montés à leurs extrémités parallèlement les uns par rapport aux autres avec un sens d'écoulement de fluide identique, sont protégés par des barreaux (5) stables qui, agencés du côté de l'écoulement, sont placés directement devant les tubes d'échange de chaleur (3) et parallèlement à ces derniers, la combinaison de barreaux (5) et de tubes d'échange de chaleur (3) étant placée dans un corps creux (8) fermé et parallélépipédique, fixé à des structures fixes (12), directement en aval et dans le prolongement de la paroi extérieure desdites structures fixes (12), si bien que le courant du cours d'eau naturel (9) passe parallèlement le long des flancs extérieurs de l'échangeur de chaleur et que le corps creux (8) maintient dans l'eau, en sa fonction de corps doté d'une force ascensionnelle, ladite combinaison dans un état de quasi-équilibre, lequel peut encore être stabilisé par des bouées et des ancrages supplémentaires.
